Europäisches Patentamt

**European Patent Office**

Office européen des brevets

(19)

(11) Publication number: **0 101 235**
A2

# (12) EUROPEAN PATENT APPLICATION

(21) Application number: **83304427.4**

(22) Date of filing: **01.08.83**

(51) Int. Cl.³: **B 29 H 9/04**

(30) Priority: **13.08.82 GB 8223392**

(43) Date of publication of application:
**22.02.84 Bulletin 84/8**

(84) Designated Contracting States:
**DE FR GB IT**

(71) Applicant: **AVON RUBBER PLC**
**Bath Road**
**Melksham Wiltshire SN12 8AA(GB)**

(72) Inventor: **Turner, Donald Milne**
**Heathfield Mount Road**
**Landsdown Bath Avon(GB)**

(72) Inventor: **Bickley, Alan Charles**
**29 Westbury View**
**Melksham Wiltshire SN12 7JJ(GB)**

(74) Representative: **Harrison, David Christopher et al,**
**MEWBURN ELLIS & CO 2/3 Cursitor Street**
**London EC4A 1BQ(GB)**

(54) **Resilient assemblies.**

(57) A resilient assembly can be given extremely high stiffness and strength against compressive loads while allowing shear movement and shear torsion by reinforcing the resilient mass (5) of rubber with high-tensile cords (6) lying parallel to each other in a direction to resist the tendency of extension of the rubber under compression.

EP 0 101 235 A2

## RESILIENT ASSEMBLIES

In many applications resilient assemblies are required which have a very high degree of stiffness in one direction but which permit substantial movement in one or two directions perpendicular to the first. Such assemblies include blocks and bushes which may act as springs and/or bearings.

If we consider the case of a block of rubber sandwiched between two parallel flat metal plates, then the shear stiffness of the pad is directly determined by the area of the rubber divided by the separation of the plates. (Throughout this specification the term "rubber" is used for brevity but includes all synthetic and natural rubbers and like elastomers). The stiffness in the direction perpendicular to the plates is again proportional to the area and to the reciprocal of the plate separation but also is influenced by a further factor which depends on the ratio of these. Calculations are normally carried out making use of a shape factor which is the ratio of the bonded areas (i.e. the areas of the rubber in contact with the plates) to the force free areas which are the areas of the exposed surfaces of the rubber between the two plates. The vertical stiffness of the pad increases steeply with the increase in this shape factor. Thus, if a pad is required to provide a certain shear compliance, the total thickness and area will be determined in order to meet the required characteristic. With only two plates, this will also have a certain compression stiffness. If it is required to increase the compression stiffness, then it can be seen that if a third plate is placed midway between the two existing plates, this will have no or negligible influence on the shear stiffness but the two half-thickness pads in series will have a higher shape factor and consequently a substantially higher compression stiffness.

The need for high compression stiffness is associated with the need to reduce the shear stress in the rubber where its edges are in contact with the metal plates so as, in turn, to give a higher load-carrying capacity.

Because rubber has a high bulk modulus when a block is compressed the rubber will bulge out with the maximum displacement occurring in the plane midway between the two plates. Inserting a bonded metal plate in this mid plane will prevent this bulge. Hence the displacement of rubber will be reduced and consequently the deflection. It will be appreciated that the purpose of the metal plate is to contain tensions. For many applications to achieve the required stiffness there may be many intermediate plates - up to 10 or 20. Because the intermediate plates are rigid, they have to be positioned very accurately to ensure long service life for the bearings, if undue edge stresses are to be avoided.

The same principles are applicable to cylindrical bush couplings or bearings where the intermediate plates now become cylindrical shells or to spherical joints where the intermediate plates are sections from the surface of a sphere.

In this invention, at least the intermediate rigid metal plates are replaced by layers of cord composed of high modulus fibres. For the assembly to be successful a number of conditions have to be met. A substantial outward tensile load has to be sustained and hence the cord must be able to carry this load with a safety factor, preferably in excess of three. The extension of the cord must be low otherwise there will be an excessive stress on the rubber between metal end plates and the next adjacent layer of cord. The cords must be resistant to degradation. There should be a high bond strength between the cord and the rubber, and, in the event of an extension being applied to the assembly or to a part of it, the cords must not be damaged by the resulting compressive stress or strain. In a plain rectangular block assembly, the cord layers would lie alternately in directions parallel to the two edges. In the case of a cylindrical assembly it is only necessary for the cords to lie in a direction parallel to the axis. The general rule is that, to contain tensions, the cord layers lie along the direction(s) in which there is a tendency to extension i.e. in a block will lie perpendicularly to the free side faces of the block.

High modulus polyaramid fibres are at present the preferred choice of material for the cord and the type commonly available as tyre cord seems particularly .suitable. Suitably, the cords would be of 2/1670 denier spaced at between 500-1000 ends per metre. Square-woven materials are not believed to be suitable as, under the repeated cycling of stresses, there would be abrasion between the fibres at the intersections of the weaves and consequent limited fatigue life. Steel cord has some attraction but there is always a danger of rusting of the cord after several years' exposure to the elements. Glass fibre is also a possibility. Polyaramid (KEVLAR, R Registered Trade Mark) and glass have moduli in excess of 50 $GN/m^2$ whereas those of Nylon, Rayon and Polyester (DACRON, Registered Trade Mark) are less than 20 $GN/m^2$.

Embodiments of the invention now be described with reference to the accompanying drawings wherein:

Figure 1 is a perspective view of a cylindrical bearing assembly;

Figure 2 is an enlarged section on the line II-II of Figure 1;

Figure 3 is a perspective view of a rectangular block;

Figure 4 is an enlarged partial cut-away of the block shown in Figure 3.

Figure 5 is a perspective view of an annular load-bearing assembly; and

Figure 6 is a section on the lines VI-VI, Figure 5.

In the first two embodiments there may be a protective rubber or other layer over the free ends of the cords, but for clarity this has been omitted and the cord ends are shown exposed.

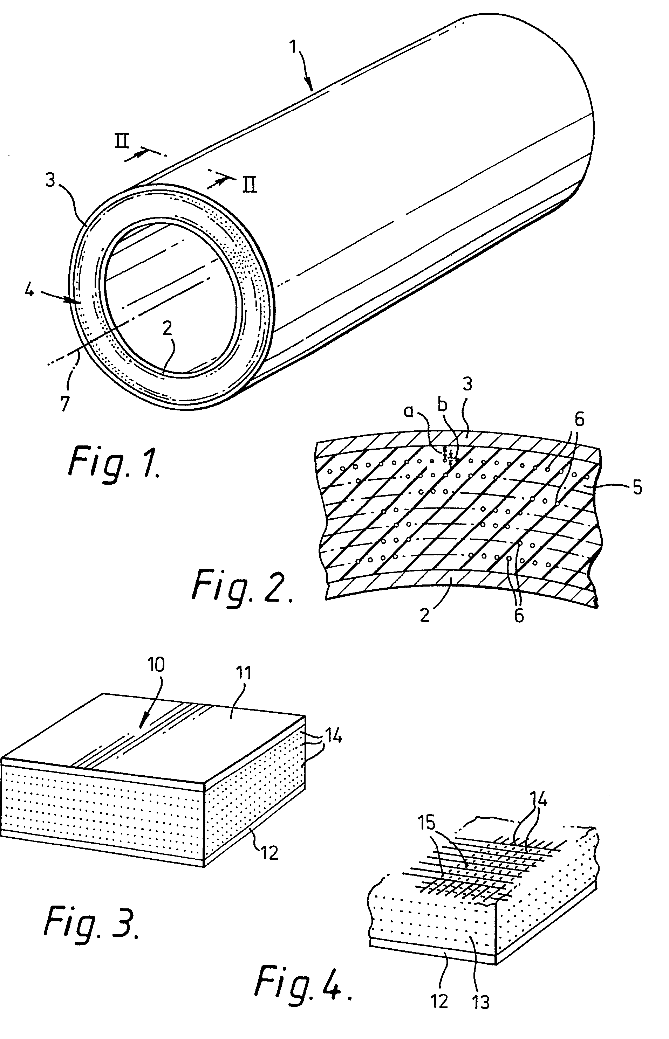

The bearing 1 shown in Figures 1 and 2 is a bushing with inner 2 and outer 3 steel cylindrical bushes. Between the bushes 2 and 3 is a laminate 4 of a rubber matrix 5 and of cords 6. In this example there are twenty layers of cords 6 in concentric cylindrical arrays of radial pitch all the cords lying parallel to the axis 7 of the cylinder. The rubber is conventionally bonded overall to the bushes. The cords 6 are of a polyaramid e.g. KEVLAR and are 2/1670 denier running at 1000 end/metre.

Dimensions of this example are as follows:-

| | |
|---|---|
| Diameter of inner bush 2 | 1 metre |
| Diameter of outer bush 3 | 1.2 m |
| Axial length of bush | 0.8 m |
| Maximum radial load | 750 tons |
| Radial deflection | 2 mm |
| Torsional compliance | $\pm 12^0$ |
| Thickness $a$ of cord ply | 1 mm |
| Thickness $b$ of intervening rubber layer | 4 mm |

It is found that all stresses can be accommodated which will give the bearing a service life of many years.

The second embodiment, seen in Figures 3 and 4, is a rectangular block assembly 10 with end plates 11, 12 between which is bonded a laminate 13 of equally spaced layers of rubber and cords 14, 15 in arrays of parallel cords which run respectively parallel to adjacent edges of the end plates.

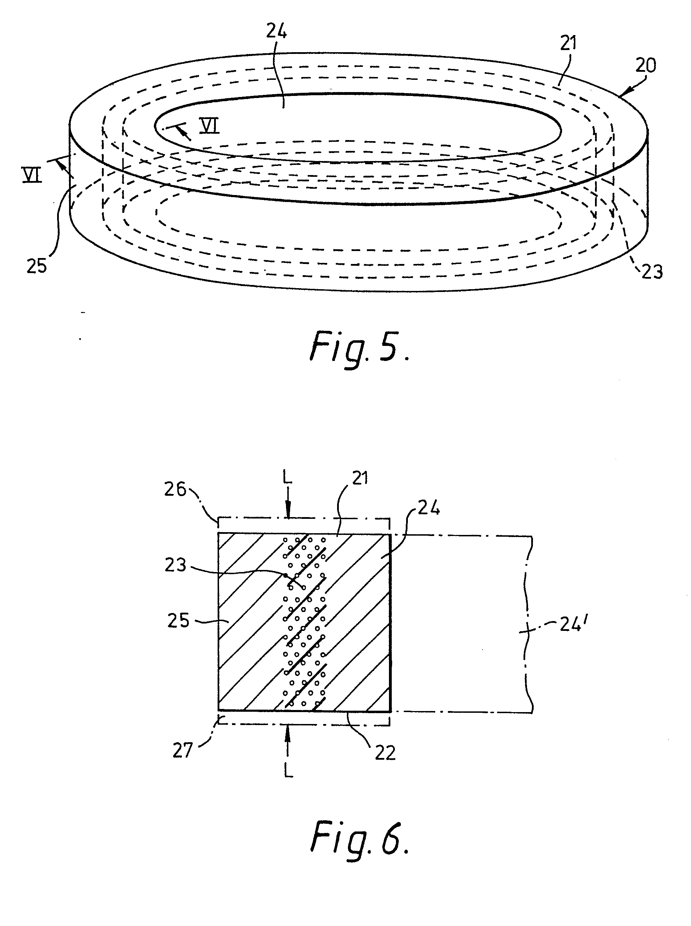

The third embodiment, seen in Figures 5 & 6, is a circular bearing 20 for sustaining high compressive loads in its axial direction, i.e. between its upper and lower end faces 21, 22 (which may have annular or solid end plates 26, 27 bonded or otherwise secured to them). The bearing is made up of an inner annulus of rubber 24, an annulus 23 of high-tensile cord extending annularly around the Axis of the bearing and an outer annulus 25 of rubber.

The cord is preferably one or more cords wound around the inner rubber 24. The inner rubber may be a solid disc as indicated at $24^1$, Figure 6, that is, a disc of which all the outer circular periphery is bounded by the high-tensile cord annulus.

One example of dimensions of this bearing are as follows:-

| | |
|---|---|
| Outer Diameter | 420 mm |
| Thickness | 80 mm |
| 20 Turns of Kevlar tyre cord at a radius of 200 mm | |
| Rubber | Shear modulus 0.81MPa |

This has the following properties:-

| | |
|---|---|
| Load to Break | 628 tonnes |
| Max Safe Load | 250 tonnes |
| Compressive Stiffness | 770 KN/mm |
| Shear Stiffness | 1.27 KN/mm |
| Shear movement | 40 mm |

It can be seen that a very high compressive load can be borne while allowing shear movement and torsion, since the cords act to restrain outward movement of the rubber; the maximum load and stiffness will be determined by the number of cord runs in the annulus and their breaking strength.

It is important to select methods of manufacture which ensure the fabric plies are correctly positioned and are not distorted during moulding. For blocks, the plies are cut accurately to width and length. The edges may be surrounded by extruded rubber slab of between 10-20 mm thickness. They are consolidated so that they are placed in the mould between their end plates with only the smallest of clearance against the metal surfaces. The mould design is such that the top plate acts as a piston within a contained space so that under the pressure of moulding nearly all the rubber is contained under pressure rather than be displaced through a mould parting line. The finished products may vary slightly in thickness but this is of little consequence.

In the case of the cylindrical bearings of Figures 1 & 2, one method of construction is to wind on the successive layers of rubber and cord (either as discrete layers on in a spiral) on to the inner bush 2 until the final diameter is slightly exceeded. Extruded rubber sections 10-20 mm thick may be applied to the exposed annular edges. Mould end plates are then brought into contact with the two annular edges and locked in position. The external diameter is wrapped with a cloth under tension ensuring that the whole rubber and cord structure was consolidated. Following cure in an autoclave, the external surface is ground down to the required diameter so that when cooled down to below 0⁰C, it may be sealed into the outer cylindrical bush 3 which is then heated to between 60-100⁰C, both the outer surface of the rubber and the inside of the bush 1 having been coated with a post cure bonding solution such as Thixon OSN-2. The curing of the bond is completed by raising the temperature to 120-130⁰C. When the outer bush 3 and the rubber equalise in temperature then the rubber will be effectively in compression of the order of 1% which is highly desirable to ensure long fatigue life.

In making the third embodiment one (or more) cords is wound around the circumference of the inner disc or annulus to give the requisite number of runs. The outer rubber 25 is cured on and around the cords, being essentially protective.

## Claims.

1. A resilient assembly for sustaining compressive loads between faces of a resilient mass and including reinforcement within the resilient mass between the faces characterised in that the reinforcement is high tensile cord (6; 14, 15; 23) bonded to the resilient mass (5; 13; 24, 25)

2. A resilient assembly according to claim 1 wherein the high tensile cord is of polyaramid.

3. A resilient assembly according to claim 1 or claim 2 which is a block (10) in which the said cords (14, 15) lie in two mutually perpendicular directions which are both perpendicular to the direction of application of compressive load.

4. A resilient assembly according to claim 1 or claim 2 which is a cylindrical bushing wherein the cords (6) lie parallel to the axis of the cylinder.

5. A resilient assembly according to claim 1 or claim 2 which is a pad wherein the cords (23) extend in an annulus of which the axis is parallel to the direction of application of compressive load (L).

**Fig. 1.**

**Fig. 2.**

**Fig. 3.**

**Fig. 4.**

Fig. 5.

Fig. 6.